# EUROPÄISCHE PATENTANMELDUNG

(11) **EP 1 692 937 A1**
(43) Veröffentlichungstag der Anmeldung: **23.08.2006**
(21) Anmeldenummer: 06003330.5
(22) Anmeldetag: 18.02.2006
(51) Int. Cl.: A01K 83/06, A01K 85/00

(54) **Ködersystem**

(30) Priorität: 22.02.2005 DE 202005002910 U
(71) Anmelder: EXORI - Import - Export Gesellschaft mit beschränkter Haftung & Co. KG, 28844 Weyhe-Dreye (DE)
(72) Erfinder: Bammann, Jens, 28209 Bremen (DE); Stüssel, Stefan, 28816 Stuhr-Fahrenhorst (DE)
(74) Vertreter: Eisenführ, Speiser & Partner

(57) **Zusammenfassung**

Ködersystem für tote Köderfische oder Gummifische, mit einem Bürstenkörper (1), der nach außen weisende Bürstenhaare (2) aufweist, und wenigstens einen mit dem Bürstenkörper verbundenen Angelhaken (6).

Die Erfindung hat sich zur Aufgabe gestellt, ein System vorzustellen, an dem der Köder besser und zuverlässiger als bisher angebracht werden kann.

## Beschreibung

Die Erfindung betrifft ein Ködersystem, wie es von Anglern, insbesondere für die Raubfischerei, eingesetzt werden kann.

Das erfindungsgemäße Ködersystem ist insbesondere für die Aufnahme toter Köderfische oder Gummifische geeignet.

Wenn der Angler bisher einen toten Köderfisch oder einen Gummifisch an seiner Angel anbringen möchte, so wird der jeweilige Köder zunächst von einem nadelähnlichen Werkzeug durchstochen, ein raubfischbisssicheres Vorfach, regelmäßig ein Stahlvorfach, durch den Köder gezogen und dann an das freie, durch den Köder durchgezogene Ende des Vorfachs, ein Haken befestigt und dieser am Köder selbst wiederum befestigt (eingehakt).

Diese Art der Befestigung, die sich seit langem bewährt hat, geht natürlich auch automatisch mit einer Beschädigung des Köders einher. Wird also der Köder vom Fisch nicht angenommen und wieder aus dem Wasser gezogen, so kann es auch sein, dass der Köder aufgrund der beim Herausziehen einwirkenden Belastung substantiell verletzt oder zerstört wird, also dann nicht mehr für weitere Angelzwecke eingesetzt werden kann.

Die Erfindung hat sich zur Aufgabe gestellt, ein System vorzustellen, an dem der Köder besser und zuverlässiger als bisher angebracht werden kann.

Die Aufgabe wird erfindungsgemäß mit einem Ködersystem mit den Merkmalen nach Anspruch 1 gelöst. Vorteilhafte Weiterbildungen sind in den Unteransprüchen beschrieben.

Das erfindungsgemäße Ködersystem zeichnet sich durch einen Bürstenkörper aus, welcher in den Köder einsteckbar ist, so dass durch die sich zurückstellenden Bürstenhaare auch der Köder festgehalten wird und später auch wieder herausziehbar ist, wenn dies gewünscht wird.

Das erfindungsgemäße Ködersystem ist überaus einfach, kostengünstig und für den gewünschten Zweck sehr wirksam.

Eine erfindungsgemäße Ausführung wird in der Figurenbeschreibung näher erläutert.

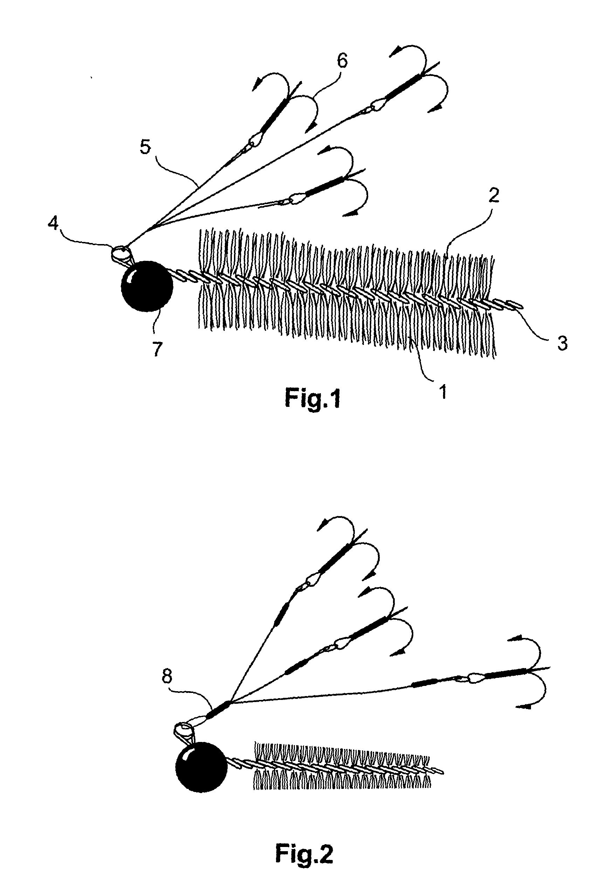

Die **Figur 1** zeigt eine erste erfindungsgemäße Ausführung, **Figur 2** eine zweite erfindungsgemäße Ausführung des erfindungsgemäßen Ködersystems.

**Figur 1** zeigt ein erfindungsgemäßes Ködersystem zur Verbindung mit einem toten Köderfisch. Das dargestellte Ködersystem weist einen Bürstenkörper **1** auf, an dem sich eine Vielzahl von Bürstenhaaren **2** in radialer Ausrichtung befindet. Die Bürstenhaare **2** werden durch zwei verdrillte Drähte **3** zusammengehalten (verklemmt). Eine andere Befestigungsart ist möglich.

An seinem vorderen Ende weist der Bürstenkörper **1** eine Öse **4** auf, an welcher im dargestellten Beispiel drei raubfischbisssichere Schnüre, bevorzugt Stahldrahtschnüre **5,** befinden. An deren freien Enden sind wiederum Haken **6** angebracht.

Während **Figur 1** ein erfindungsgemäßes Ködersystem für die Aufnahme eines toten Köderfisches zeigt, zeigt **Figur 2** ein erfindungsgemäßes Ködersystem der gleichen Machart, jedoch mit einem deutlich geringeren Bürstenkörperdurchmesser, welcher insbesondere zur Aufnahme eines Gummifisches ausgelegt ist.

Bei beiden erfindungsgemäßen Ködersystemen ist am vorderen Ende, an dem auch die Öse **4** zur Aufnahme der Schnüre **5** mit den Haken **6** ausgebildet ist, eine Gewichtsbeschwerung in Form einer Bleikugel **7** vorgesehen. Durch die gewünschte Auslegung der Bleikugel **7** kann das Gewicht des gesamten Ködersystems vorbestimmt werden, um somit ein sicheres Absinken des Ködersystems im Wasser zu gewährleisten.

Eine weitere Möglichkeit zur Festlegung und Feststellung der Haken **6,** die regelmäßig engstmöglich am Köder anliegen, kann auch ein Ring oder ein Röhrchen **8** vorgesehen sein, welches durch Verschieben in Richtung der Haken **6** die Hakenschnüre **5** engstmöglich zusammenhält.

Das erfindungsgemäße Ködersystem verhindert ein Verrutschen des Köders, da durch die Bürstenhaare **2** der Köder sicher festgehalten wird. Dadurch können gleichzeitig die Angelhaken **6,** im dargestellten Beispiel Drillinge, bestmöglich zum Köder positioniert werden und das erfindungsgemäße Ködersystem verhindert effektiv Hänger, weil durch die spezielle Positionierung der Befestigungsöse **4** der Fisch immer leicht nach vorne gekippt eingezogen wird.

Die Darstellungen in den Figuren sind etwa 1 zu 1.

## Patentansprüche

1. Ködersystem für tote Köderfische oder Gummifische, mit einem Bürstenkörper (1), der nach außen weisende Bürstenhaare (2) aufweist, und wenigstens einen mit dem Bürstenkörper verbundenen Angelhaken (6).

2. Ködersystem nach Anspruch 1,
**dadurch gekennzeichnet, dass** der Bürstenkörper (1) an einem Ende eine Öse (4) zur Aufnahme des Angelhakens (6) aufweist.

3. Ködersystem nach einem der vorherigen Ansprüche,
**dadurch gekennzeichnet, dass** der Bürstenkörper (1) an einem Ende mit einer Gewichtsbeschwerung (7) versehen ist.

4. Ködersystem nach einem der vorherigen Ansprüche,
**dadurch gekennzeichnet, dass** der Bürstenkörper (1) aus zwei ineinander verschlungenen Drähten (3) besteht, zwischen denen die Bürstenhaare (2) eingeklemmt sind.

5. Ködersystem nach einem der vorherigen Ansprüche,
**dadurch gekennzeichnet, dass** der Bürstenkörper (1) einen Durchmesser von etwa 5 bis 20 mm, bevorzugt etwa 6 bis 15 mm, aufweist.

6. Ködersystem nach einem der vorherigen Ansprüche,
**dadurch gekennzeichnet, dass** an dem Ködersystem ein oder mehrere raubfischbisssichere Vorfächer (5) angebracht sind, die jeweils einen Haken (6) halten.

7. Ködersystem nach Anspruch 7,
**dadurch gekennzeichnet, dass** das Ködersystem mehr als zwei raubfischbisssichere Vorfächer (5) mit unterschiedlicher Länge aufweist.

8. Ködersystem nach einem der vorherigen Ansprüche,
**dadurch gekennzeichnet, dass** der Bürstenkörper (1) an seinem vorderen Ende die Gewichtsbeschwerung (7) und am gleichen Ende eine Öse (4) zur Aufnahme eines raubfischbisssicheren Vorfachs (5), bevorzugt eines Stahlvorfachs, aufweist.

9. Ködersystem nach einem der vorherigen Ansprüche,
**dadurch gekennzeichnet, dass** es dann, wenn mehrere raubfischbisssichere Vorfächer (5) ausgebildet sind, mit einem die Vorfächer (5) umschließenden Ring oder Röhrchen (8) versehen ist, mittels dem die Vorfächer (5) auf einer gewünschten Länge zusammenführbar sind.
